# EUROPÄISCHE PATENTANMELDUNG

(11) **EP 2 559 330 A1**
(43) Veröffentlichungstag der Anmeldung: **20.02.2013**
(21) Anmeldenummer: 12401168.5
(22) Anmeldetag: 08.08.2012
(51) Int. Cl.: A01C 7/04

(54) **Pneumatische Einzelkornsämaschine**

(30) Priorität: 19.08.2011 DE 102011052829
(71) Anmelder: Amazonen-Werke H. Dreyer GmbH & Co. KG, 49205 Hasbergen (DE)
(72) Erfinder: Brüggemann, Klaus, 27777 Ganderkesee (DE)

(57) **Zusammenfassung**

Pneumatische Einzelkornsämaschine mit einem einen Saatgutvorratsbehälter aufweisenden Gehäuse und zumindest einer drehbar angetriebenen Vereinzelungstrommel (2), in deren Umfangsmantel (3) kreisförmig in Perforationsreihen (4) angeordnete Perforationen (5) angebracht sind, einem Gebläse, mittels welchem eine Druckdifferenz zwischen dem Innenraum der Vereinzelungstrommel (2) und dem Außenbereich der Vereinzelungstrommel (2) erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände (11) aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung (17) bis an die Trommeloberfläche zumindest annähernd heranreichend angeordnet ist, wobei die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, wobei zumindest einigen Ausbringleitungen (18) motorisch betätigbare Absperrmittel (24) zugeordnet sind, wobei die Absperrmittel im Bereich der Eingangsöffnungen der Ausbringleitungen angeordnet sind, wobei zumindest im Übergabebereich der vereinzelten Saatkörner von der Trommel in die Ausbringleitungen zwischen den einzelnen Perforationsreihen Trennwände (26) angeordnet sind, dass die Trennwände (26) zumindest annähernd bis an die Oberfläche der Trommel heranreichen. Um hier in einfacher Weise Abhilfe zu schaffen, ist vorgesehen, dass die Trennwände (26) außermittig zwischen jeweils einer benachbarten Eingangsöffnung angeordnet sind.

## Beschreibung

Die Erfindung betrifft eine pneumatische Einzelkornsämaschine gemäß des Oberbegriffes des Patentanspruches 1.

Eine derartige Einzelkornsämaschine ist durch die DE 10 2009 043 914 A1 bekannt. Bei dieser Einzelkornsämaschine sind im Übergabebereich der vereinzelten Saatkörner von der Vereinzelungstrommel in die Einmündungsöffnungen der Aussaatleitungen jeweils mittig zwischen einander benachbarten Einmündungsöffnungen Trennwände angeordnet. Den einzelnen Eingangsöffnungen sind als verschwenkbare Klappen ausgebildete Abdeckeinrichtungen zum wahlweise verschließen der Einmündungsöffnungen der Aussaatleitungen zugeordnet. Hierbei kann es vorkommen, dass sich zwischen den verschwenkbaren Klappen und den Trennwänden Saatkörner festsetzen, so dass die Klappen nicht mehr verschwenkbar sind oder das Verschwenken der Klappen in unzulässiger Weise erschwert wird.

Der Erfindung liegt die Aufgabe zu Grunde, hier in einfacher Weise Abhilfe zu schaffen.

Diese Aufgabe wird erfindungsgemäß dadurch gelöst, dass die Trennwände außermittig zwischen jeweils einer benachbarten Einmündungsöffnung angeordnet sind.

Infolge dieser Maßnahme wird durch die einseitige versetzte Anordnung der Trennwände eine außermittige Anordnung der Trennwände zu den einander benachbarten Einmündungsöffnung der Ausbringleitung erreicht. Hierdurch wird einerseits der Abstand auf der einen Seite zwischen der Einmündungsöffnung und der Trennwand derartig vergrößert, dass sich hier keine Saatkörner verklemmen können und andererseits der Abstand auf der anderen Seite zwischen der Einmündungsöffnung und der Trennwand derartig verkleinert, dass hier die Gefahr des Verklemmens von Saatkörnern äußerst gering ist.

In jedem Zwischenraum zwischen den jeweiligen Einmündungsöffnungen ist jeweils eine Trennwand angeordnet. Hierbei sind alle Trennwände in eine Richtung seitlich versetzt angeordnet. Hierdurch ergibt sich eine vorteilhafte Anordnung der Trennwände zu den Einmündungsöffnungen.

In jedem Zwischenraum ist zwischen den jeweiligen Einmündungsöffnungen jeweils eine Trennwand angeordnet. In einer Ausführungsform weist die Einzelkornsämaschine mehrere Vorratsbehälter und/oder Vorratsbehälterbereiche mit zugeordneten Vereinzelungstrommeln und/oder Trommelbereichen auf. Hierbei sind alle einem Vorratsbehälter und/oder Vorratsbehälterbereichen zugeordneten Trennwände in eine Richtung seitlich versetzt angeordnet.

Eine vorteilhafte Anordnung der Trennwände ergibt sich dadurch, dass die Trennwände jeweils unmittelbar benachbart zu der zugeordneten Einmündungsöffnung angeordnet sind.

Ein vorteilhaftes verschwenken der Klappen in Bezug auf die Einmündungsöffnung der Aussaatleitungen und Trennwände ergibt sich dadurch, dass die Trennwände in Bezug auf die verschwenkbar angeordneten Absperrmittel auf der der Öffnungsrichtung der Absperrmittel abgewandten Seite im Bereich der Einmündungsöffnung angeordnet sind.

Es hat sich als vorteilhaft herausgestellt, dass die Trennwände zumindest in Teilbereichen flexibel ausgebildet sind. Hierdurch wird erreicht, dass ein störungsfreies schließen der Einmündungsöffnung durch die Klappe auch dann möglich ist, falls sich in dem engen Bereich zwischen Einmündungsöffnung der Aussaatleitung und der zugeordneten Trennwand Saatkörner verklemmt haben sollten. In diesem Falle kann er die flexible Trennwand über die Körner durch die Klappe zur Seite geschoben werden, so dass die Klappe die Einmündungsöffnung sicher verschließt und/oder abdeckt. Die flexible Trennwand kann also ausweichen.

Um sie unterschiedlichen Einsatzbedingungen anpassen zu können, ist vorgesehen, dass die Trennwände auswechselbar angeordnet sind. Hierdurch ist ein einfacher Austausch der Trennwände gegen andere optimierte Trennwände möglich.

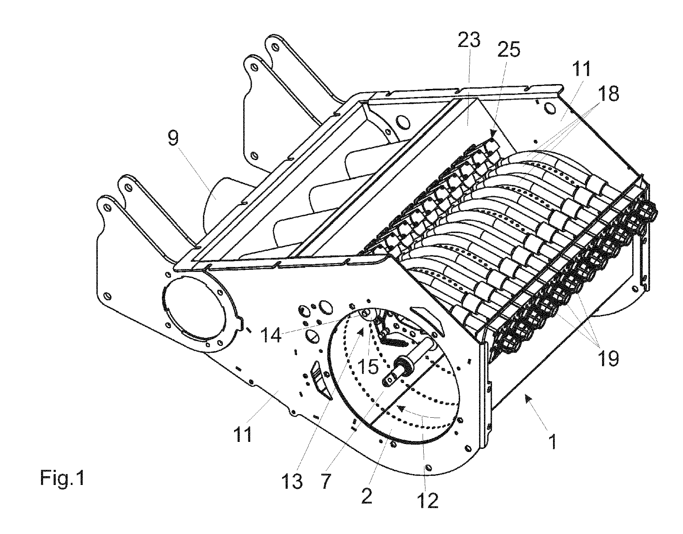

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht,
- Fig. 2: das Vereinzelungsgehäuse mit der Vereinzelungstrommel gemäß Fig. 1 in Seitenansicht,

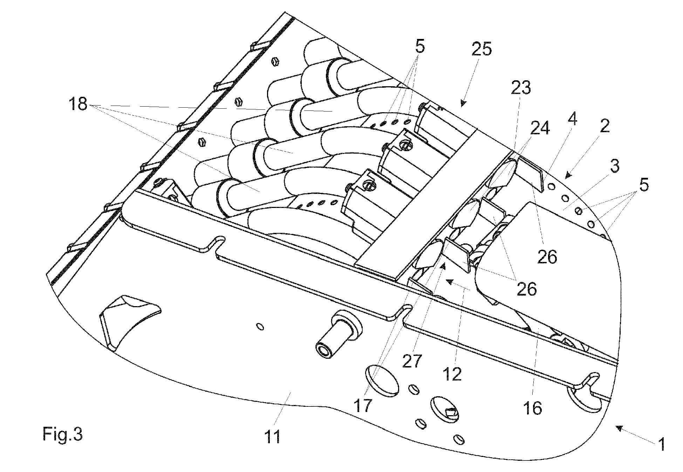

- Fig. 3: ein Teilbereich des Vereinzelungsgehäuses mit dem Ablöse- und Übergabebereich der Saatkörner von der Trommel in die Einmündungsöffnungen der Ausbringleitungen in vergrößertem Maßstab und perspektivischer Ansicht, wobei die Einmündungsöffnung durch die Klappen der Absperrmittel in Öffnungsstellung dargestellt sind,
- Fig. 4: ein Teilbereich des Vereinzelungsgehäuses mit dem Ablöse- und Übergabebereich der Saatkörner von der Trommel in die Einmündungsöffnung der Ausbringleitungen in vergrößertem Maßstab und perspektivischer Ansicht gemäß Fig. 3, wobei die Einmündungsöffnungen durch die Klappe der Absperrmittel in Absperrstellung dargestellt sind und
- Fig. 5: die Anordnung der Trennwände zu den Einmündungsöffnungen in der Ansicht V - V.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist ein nicht dargestellter Vorratsbehälter angeordnet. In den Umfangsmantel 3 der Vereinzelungstrommel 2 sind kreisförmig in Perforationsreihen 4 angeordnete Perforationen 5 angebracht. Der Vorratsbehälter und das Vereinzelungsgehäuse 1 werden auf der Vereinzelungsseite 6 der Trommel 2 mit einem Überdruck beaufschlagt. Somit entsteht eine Druckdifferenz zwischen dem Innenraum 7 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über den Anschlussstutzen 9 an das Vereinzelungsgehäuse mittels einer Luftleitung angeschlossen. Wenn die Vereinzelungstrommel 2 durch den Saatgutvorrat, der sich zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner an. Die Seitenwände 11 des Vereinzelungsgehäuses 1 erstrecken sich parallel zur Bewegungsrichtung 12 der Trommel 1 und wirken zumindest annähernd abdichtend mit der Trommel 1 zusammen.

Des Weiteren ist der Trommel 2 eine die an die Perforationen 5 angelegte Druckdifferenz zum Ablösen der Samenkörner von den Perforationen 5 unterbrechende Abdeckeinrichtung 13 im Innenraum 7 der Trommel 2 angeordnet. Diese Abdeckeinrichtung 13 weist auf einer am Vereinzelungsgehäuse 1 angeordneten Welle 14 drehbar gelagerte walzenartige Elemente 15 auf.

Im Vereinzelungsbereich 8 der Trommel 2 ist zwischen dem Saatgutvorratsbereich 10 und dem Bereich, dem die Abdeckeinrichtung 13 zugeordnet ist, eine Abstreifereinrichtung 16 angeordnet, um Doppelbelegungen an den Perforationen 5 zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten. An die Verbindungsstücke der Ausbringleitungen 18 sind Ausbringverlängerungsleitungen, die die Ausbringleitungen bis zu den Ausbringelementen verlängern, anzuschließen.

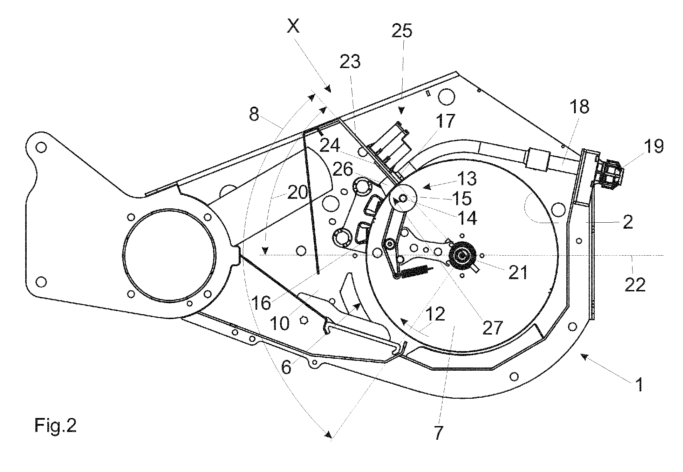

Die Einmündungsöffnungen 17 der Ausbringleitungen 18 und die zugeordneten Abdeckeinrichtungen 13 sind, insbesondere wie die Fig. 2 zeigt, im auf die Drehrichtung 12 der Trommel 2 bezogenen aufsteigenden Rotationsbereich des Vereinzelungsbereiches 8 der Trommel 2 angeordnet. Hierbei sind die Eingangsöffnungen 17 und die zugeordneten Abdeckmittel 15 der Abdeckeinrichtung 13 in einem Bereich angeordnet, der in einem Winkelbereich 20 zwischen 0° und 60°, im Ausführungsbeispiel von etwa 45°, zu einer durch die Trommeldrehachse 21 gezogenen Horizontalen 22 liegt.

Die im Bereich der Ausbringleitungen 18 liegende Wand 23 des Vereinzelungsgehäuses 1 ist im Bereich der Eingangsöffnungen 17 der Ausbringleitungen 18 angeordnet.

Den Ausbringleitungen 18 sind im Bereich der Einmündungsöffnungen 17 als verschwenkbare Klappen 24 ausgebildete Absperrmittel 25 angeordnet, um die jeweilige Eingangsöffnung 17 der Ausbringleitungen 18 absperren zu können.

Weiterhin sind an der im Bereich der Ausbringleitungen 18 angeordneten Wand 23 des Vereinzelungsgehäuses 1 im Bereich der Einmündungsöffnungen 17 Trennwände 26 angeordnet. Diese Trennwände 26 sind im Übergabebereich 27 der vereinzelten Saatkörner von der Trommel 2 in die Ausbringleitungen 18 zwischen den einzelnen Perforationsreihen 4 angebracht. Hierbei reicht die Unterseite der Trennwände 26 zumindest annähernd bis an die Oberfläche der Trommel 2 heran. Weiterhin sind die Trennwände 26 zumindest annähernd bis in den Bereich, in welchem die Saatkörner durch die Abdeckeinrichtung 13 von den Perforationen 4 durch die Unterbrechung der Druckdifferenz abgelöst werden, reichend angeordnet.

Wenn einzelnen Ausbringleitungen 18, d.h. einzelnen Ausbringelementen zur Reduzierung der Arbeitsbreite oder zum Anlegen von Fahrgassen keine Saatkörner zugeleitet werden sollen, werden über eine vorzugsweise elektronische Steuereinrichtung ansteuerbare Betätigungseinrichtungen für die Klappen 24 der Absperrmittel 25 betätigt.

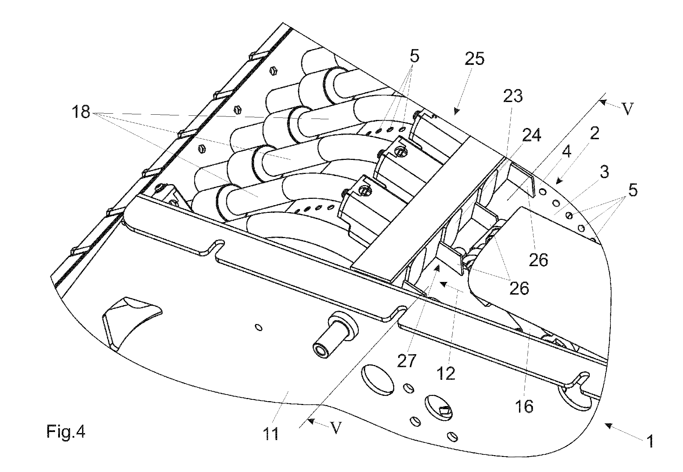

Wenn die Klappen 24 der Absperrmittel 25 die Einmündungsöffnungen 17 der Ausbringleitungen 18 verschließen, wie Fig. 4 dargestellt ist, können die Saatkörner nicht mehr über die Einmündungsöffnungen 17 in die Ausbringleitungen 18 gelangen und fallen aufgrund der Schwerkraft entlang der Trommeloberfläche der Trommel 2 seitlich der Perforationsreihen 4 in den Saatgutvorratsbereich 10 zurück. Durch die Trennwände 26 wird verhindert, dass die Saatkörner beim Ablösevorgang und zu Beginn des Zurückfallvorganges in den Saatgutvorratsbereich 10 soweit seitlich abgelenkt werden können, dass sie die vereinzelten Saatkörner der benachbarten Perforationsreihen 4 berühren oder die Vereinzelung der Saatkörner der benachbarten Perforationsreihen 5 stören können.

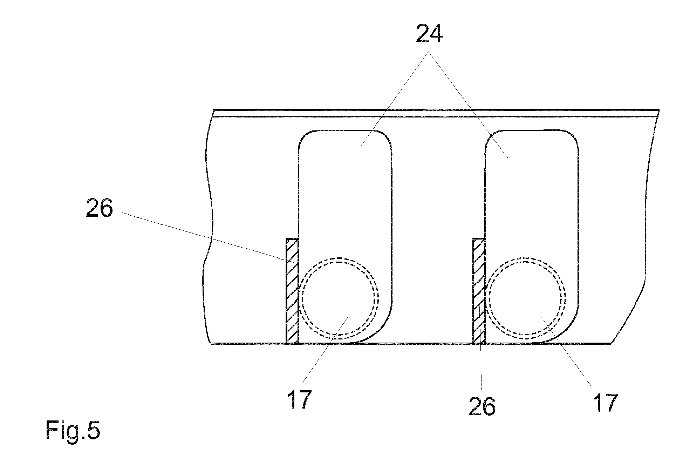

Die Trennwände 26 sind außer mittig zwischen jeweils einander benachbarten Einmündungsöffnungen 17 angeordnet, wie insbesondere die Fig. 4 und 5 zeigen. Alle Trennwände sechstens 20 sind in einer Richtung seitlich versetzt zu den Einmündungsöffnungen 17 angeordnet. Hierbei sind die Trennwände jeweils unmittelbar benachbart zu der zugeordneten Einmündungsöffnung 17 angeordnet. Die Trennwände 26 sind in Bezug auf die verschwenkbar angeordneten als Klappen ausgebildeten Absperrmittel 24 auf der Eröffnungsrichtung der Absperrmittel abgewandten Seite im Bereich der jeweiligen Einmündungsöffnung 17 angeordnet. Die Trennwände 26 sind zumindest in Teilbereichen flexibel ausgebildet, und zwar insbesondere in dem Bereich, der den Klappen 24 unmittelbar benachbart ist. Hierdurch können die Klappen 24, wenn sich zwischen der jeweiligen Einmündungsöffnung 17 und der zugeordneten Trennwand 26 Saatkörner festgesetzt haben, seitlich ausweichen, wenn die jeweilige Klappe 24 in Absperrstellung geschwenkt wird.

Auch ist es möglich, dass die Trennwände auswechselbar an der Wand 23 angeordnet sind.

Bei Einzelkornsämaschine, die mehrere Vorratsbehälter und/oder Vorratsbehälterbereiche mit zugeordneten Vereinzelungstrommel und/oder Trommelbereichen aufweisen, sind alle einem Vorratsbehälter und/oder Vorratsbehälterbereich in zugeordnete Trennwände in eine Richtung seitlich versetzt angeordnet.

## Patentansprüche

1. Pneumatische Einzelkornsämaschine mit einem einen Saatgutvorratsbehälter aufweisenden Gehäuse und zumindest einer drehbar angetriebenen Vereinzelungstrommel, in deren Umfangsmantel kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, wobei die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, wobei zumindest einigen Ausbringleitungen motorisch betätigbare Absperrmittel zugeordnet sind, wobei die Absperrmittel im Bereich der Eingangsöffnungen der Ausbringleitungen angeordnet sind, wobei zumindest im Übergabebereich der vereinzelten Saatkörner von der Trommel in die Ausbringleitungen zwischen den einzelnen Perforationsreihen Trennwände angeordnet sind, dass die Trennwände zumindest annähernd bis an die Oberfläche der Trommel heranreichen, **dadurch gekennzeichnet, dass** die Trennwände (26) außermittig zwischen jeweils einer benachbarten Einmündungsöffnung (17) angeordnet sind.

2. Einzelkornsämaschine nach Anspruch 1, wobei in jedem Zwischenraum zwischen den jeweiligen Einmündungsöffnungen (17) jeweils eine Trennwand (26) angeordnet ist, **dadurch gekennzeichnet, dass** alle Trennwände (26) in eine Richtung seitlich versetzt angeordnet sind.

3. Einzelkornsämaschine nach Anspruch 1, wobei in jedem Zwischenraum zwischen den jeweiligen Eingangsöffnungen jeweils eine Trennwand angeordnet ist, **dadurch gekennzeichnet, dass** die Einzelkornsämaschine mehrere Vorratsbehälter und/oder Vorratsbehälterbereiche mit zugeordneten Vereinzelungstrommeln und/oder Trommelbereichen aufweist, dass alle einem Vorratsbehälter und/oder Vorratsbehälterbereichen zugeordneten Trennwände in eine Richtung seitlich versetzt angeordnet sind.

4. Einzelkornsämaschine nach einem oder mehreren der vorstehenden Ansprüche, **dadurch gekennzeichnet, dass** die Trennwände (26) jeweils unmittelbar benachbart zu der zugeordneten Einmündungsöffnung (17) angeordnet sind.

5. Einzelkornsämaschine nach einem oder mehreren der vorstehenden Ansprüche, **dadurch gekennzeichnet, dass** die Trennwände (26) in Bezug auf die verschwenkbar angeordneten Absperrmittel (24) auf der der Öffnungsrichtung der Absperrmittel (24) abgewandten Seite im Bereich der Einmündungsöffnung (17) angeordnet sind.

6. Einzelkornsämaschine nach einem oder mehreren der vorstehenden Ansprüche, **dadurch gekennzeichnet, dass** die Trennwände (26) zumindest in Teilbereichen flexibel ausgebildet sind.

7. Einzelkornsämaschine nach einem oder mehreren der vorstehenden Ansprüche, **dadurch gekennzeichnet, dass** die Trennwände (26) auswechselbar angeordnet sind.
